# EUROPÄISCHE PATENTSCHRIFT

(11) **EP 1 932 602 B1**
(45) Veröffentlichungstag und Bekanntmachung des Hinweises auf die Patenterteilung: **02.09.2009**
(21) Anmeldenummer: 07022725.1
(22) Anmeldetag: 23.11.2007
(51) Int. Cl.: B21C 37/15, B23D 21/02, F16L 43/00

(54) **Verfahren und vorbearbeitetes Rohr zum Herstellen eines Rohrs mit abknickendem Verlauf oder mit als Polygonzug ausgeführter Biegung**
Method and pre-processed pipe for manufacturing a pipe with a bend or a traverse curve
Procédé et tuyau préfabriqué destiné à la fabrication d'un tuyau à tracé plié ou ayant une courbure à tracé polygonal

(30) Priorität: 11.12.2006 DE 102006058218
(43) Veröffentlichungstag der Anmeldung: 18.06.2008
(73) Patentinhaber: Witzenmann GmbH, 75175 Pforzheim (DE)
(72) Erfinder: Tubach, Hans, 75334 Straubenhardt (DE)
(74) Vertreter: Lemcke, Brommer & Partner

(56) Entgegenhaltungen:
- AU-B2- 491 529
- DE-A1- 3 905 788
- DE-U1- 20 009 269
- FR-A- 2 618 364
- GB-A- 2 320 215
- US-A- 2 837 160

## Beschreibung

Die Erfindung betrifft ein Verfahren zum Herstellen eines Rohrs mit abknickendem Verlauf oder mit als Polygonzug ausgeführter Biegung nach dem Oberbegriff des Anspruchs 1 sowie ein vorbearbeitetes Rohr zum Herstellen eines solchen Rohrs nach dem Oberbegriff des Anspruchs 8. Insbesondere betrifft die vorliegende Erfindung ein Verfahren und ein vorbearbeitetes Rohr zur Herstellung eines solchen Rohrs aus Metall.

Abgeknickte oder gekrümmte Metallrohre werden im Allgemeinen zunächst geradlinig gefertigt und danach Krümmungen oder Knicke durch Bearbeiten des zunächst geradlinigen Rohrs in dieses eingebracht. Dies kann beim Rohrhersteller ab Werk geschehen, oder aber vor Ort beim Anwender. Sofern relativ große Krümmungsradien hergestellt werden sollen und das Verhältnis des Durchmessers des Rohres zu dessen Wandstärke nicht zu groß ist, werden Krümmungen üblicherweise durch Biegen des Rohres erzeugt. Das Biegen findet jedoch seine Grenze, wenn sehr kleine Krümmungsradien bis zu einem gewollten Knick in das Rohr eingebracht werden sollen, oder wenn ein dünnwandiges Rohr mit großem Durchmesser gebogen werden soll. Auch dann, wenn auf kleinem Raum mehrere Biegungen in unterschiedliche Raumrichtungen in das Rohr eingebracht werden müssen, wird das Biegen des Rohres unpraktikabel.

Dementsprechend ist es alternativ bekannt, eine abknickende Stelle des Rohres so herzustellen, dass zwei Gehrungsschnitte in das gerade Rohr eingebracht werden, wodurch zwei Rohrabschnitte mit entlang der Schnittebenen verlaufenden stirnseitigen Gehrungsschnittflächen und ein zwischenliegender Schnittkeil entstehen, und dann nach Entfernen des Schnittkeils die beiden Rohrabschnitte an ihren Gehrungsschnittflächen aneinandergesetzt und rundum miteinander verschweißt werden. Eine Biegung mit größerem Biegeradius bzw. Biegewinkel kann auf diese Weise durch mehrere leichte Knicke in Form eines Polygonzugs hergestellt werden.

Das Ausschneiden des Schnittkeils durch das Setzen zweier Gehrungsschnitte nebst dem anschließenden winkligen Zusammensetzen der beiden hierdurch hergestellten Rohrabschnitte mit nachfolgendem Verschweißen ist allerdings aufwendiger als ein Biegen des Rohrs. Denn durch das Ausschneiden des Schnittkeils entstehen zwei separate Rohrabschnitte, die vor dem Verschweißen sorgfältig aneinandergesetzt und insbesondere hinsichtlich einer axialen Verdrehung sorgfältig ausgerichtet werden müssen. Vor dem Verschweißen der beiden Rohrabschnitte mit einer umlaufenden, flüssigkeits- und gasdichten Schweißnaht müssen in aller Regel die sorgsam aneinander gesetzten und ausgerichteten Rohrabschnitte mittels provisorischer Heftungs-Schweißpunkte aneinander geheftet werden, so dass die Ausrichtung während des Schweißvorgangs beibehalten wird. Das Ausrichten und insbesondere das Setzen der Heftpunkte kann im Allgemeinen nur manuell vorgenommen werden. Wenn eine Biegung mit mehreren, polygonzugartig aneinander gesetzten Knicken erzeugt werden soll, entstehen darüber hinaus mehrere einzelne Rohrabschnitte, deren Handhabung sehr umständlich wird und die insbesondere auch verwechselt werden können. Letzteres erlangt dann besondere Wichtigkeit, wenn keine gleichmäßige Biegung in eine Raumrichtung hergestellt werden soll, sondern die Abknickungen des Polygonzugs in unterschiedlichen Raumrichtungen orientiert sind, gegebenenfalls auch noch mit unterschiedlichen Biegeradien.

In der GB-A-2 320 215 ist ein Verfahren zum Herstellen eines Rohrs mit abknickendem Verlauf beschrieben, bei dem zwei Gehrungsschnitte in das Rohr eingebracht und ein dabei entstehender Schnittkeil dem Rohr entnommen wird. Anschließend wird das Rohr so gebogen, dass die Schnittflächen der Gehrungsschnitte aufeinander zu liegen kommen. Beim Ausschneiden des Schnittkeils wird hierbei eine Seitenfläche des im Querschnitt rechteckigen Rohrs komplett stehen gelassen, so dass die beiden Rohrabschnitte nach dem Ausschneiden des Schnittkeils noch immer untereinander verbunden sind. Dies wird durch den rechteckigen Querschnitt des Rohres ermöglicht, wobei auch die korrekte Ausrichtung der beiden miteinander zu verschweißenden Rohrabschnitte durch die spezielle Rechteckform des Rohres erleichtert wird. Rohre ohne im Querschnitt gerade verlaufende Seitenwände können nach diesem Verfahren nicht bearbeitet werden.

Ausgehend von diesem Stand der Technik liegt der vorliegenden Erfindung die Aufgabe zugrunde, die eingangs genannte Verfahrensalternative zum Herstellen eines Rohrs mit abknickendem Verlauf oder mit als Polygonzug ausgeführter Biegung, bei dem mittels zweier Gehrungsschnitte ein Schnittkeil herausgeschnitten und die beiden hierdurch hergestellten Rohrabschnitte aneinander gesetzt und miteinander verschweißt werden, hinsichtlich seiner Handhabbarkeit und Fehlersicherheit sowie der Schweißqualität zu verbessern.

Gelöst ist diese Aufgabe durch ein Verfahren mit den Merkmalen des Anspruchs 1 sowie mit einem vorbearbeiteten Rohr nach den Merkmalen des Anspruchs 8.

Bevorzugte Weiterbildungen des Verfahrens finden sich in den Ansprüchen 2 bis 7; eine bevorzugte Ausgestaltung des vorbearbeiteten Rohrs ist im Anspruch 9 niedergelegt.

Im Rahmen der vorliegenden Erfindung werden also die Gehrungsschnitte zum Ausschneiden des Schnittkeils so gesetzt, dass sich die Schnittebenen in einem in der Rohrwandung liegenden Punkt schneiden und an diesem Punkt ein die beiden Rohrabschnitte verbindender, biegbarer Steg stehengelassen wird. Die beiden Rohrabschnitte werden durch die Gehrungsschnitte also nicht vollständig getrennt, sondern sie bleiben über den erfindungsgemäß stehengelassenen Steg verbunden. Dieser Steg ist dünn genug, dass die beiden Rohrabschnitte nach Herausnehmen des Schnittkeils durch eine Schwenkbewegung um den dann wie ein Scharnier fungierenden Steg zueinander hin geklappt werden können, bis die beiden Gehrungsschnittflächen aufeinander liegen. Andererseits ist der Steg jedoch stabil genug, um ein unbeabsichtigtes Trennen der beiden Rohrabschnitte zu verhindern und ein axiales Gegeneinander-Verdrehen der Rohrabschnitte auszuschließen. Da die Rohrabschnitte also axial nicht mehr gegeneinander verdreht werden können, entfällt die Notwendigkeit, die Rohrabschnitte vor dem Verschweißen zeitaufwendig axial auszurichten. Da eine radiale Ausrichtung der beiden Gehrungsschnittflächen zueinander außerdem wesentlich einfacher wird, weil der Steg die beiden Rohrabschnitte an einem Punkt ihres Umfangs zueinander fixiert und damit ein Freiheitsgrad der Ausrichtbewegung eliminiert ist, wird das Heften der ausgerichteten Rohrabschnitte vor dem Verschweißen normalerweise entfallen können.

Das im Rahmen der vorliegenden Erfindung ebenfalls zur Verfügung gestellte vorbearbeitete Rohr besteht aus mindestens zwei Rohrabschnitten, die im Schnittpunkt der Schnittebenen der beiden Gehrungsschnitte über einen stehengelassenen, biegbaren Steg miteinander verbunden sind, so dass die Herstellung eines Knicks oder einer Biegung vor Ort anhand des angelieferten, erfindungsgemäß vorbearbeiteten Rohrs sehr einfach wird.

Erfindungsgemäß werden an einer vom Steg beabstandeten Stelle der Gehrungsschnittflächen der beiden beteiligten Rohrabschnitte beim Setzen der Gehrungsschnitte in die Gehrungsschnittfläche eines der beiden Rohrabschnitte ein Vorsprung und in die Gehrungsschnittfläche des anderen Rohrabschnittes eine Ausnehmung als passgenaues Gegenstück zum Vorsprung eingebracht. Wenn die Gehrungsschnitte mittels Laserstrahlung, mittels Wasserstrahl oder durch Plasmaschneiden erfolgen, können Vorsprünge und Ausnehmungen durch eine entsprechende rechnergesteuerte Schnittführung sehr leicht hergestellt werden. Hierdurch werden Heftungs-Schweißpunkte zum Ausrichten der Rohrabschnitte vor dem Schweißen vollständig überflüssig, denn das Zentrieren über den Vorsprung und die Ausnehmung eliminiert die Gefahr, dass sich der erfindungsgemäße Steg beim Verbiegen während des Aufeinanderklappens der Rohrabschnitte gleichzeitig verwindet. Die Kombination des Stegs mit der zentrierenden Eigenschaft des Vorsprungs und der Ausnehmung legt die Lage der Rohrabschnitte zueinander eindeutig fest, so dass sich dann, wenn der Vorsprung in die Ausnehmung eingepasst wird, eine exakte Ausrichtung der Rohrabschnitte mit exakt aufeinanderliegenden Gehrungsschnittflächen von selbst ergibt und die Rohrabschnitte umstandslos miteinander verschweißt werden können.

Bevorzugt, jedoch nicht notwendigerweise, sind der Vorsprung und die Ausnehmung als Zentrierhilfen in etwa diametral dem Steg gegenüberliegend in die Gehrungsschnittflächen der beiden Rohrabschnitte eingebracht. Denn je weiter diese Zentrierhilfen und der Steg auseinander liegen, umso besser und genauer ist die automatische Ausrichtung der beiden Rohrabschnitte zueinander.

Der Vorsprung kann als dreieckige oder abgerundete Nocke ausgebildet sein, wobei dann die als passgenaues Gegenstück dienende Ausnehmung eine dreieckige oder rinnenförmige Einkerbung ist. Diese Ausformung der Zentrierhilfen erleichtert die Zentrierung, insbesondere wenn der Steg relativ instabil und die Rohrabschnitte sehr dünnwandig bzw. die Rohrdurchmesser sehr groß sind.

Die abgeschrägten Flanken der dreieckigen oder abgerundeten Nocke sowie die entsprechenden Gegenstücke in der Ausnehmung dienen dann als Einführschrägen.

Weitere Vorteile ergeben sich, wenn die Gehrungsschnitte so gesetzt werden, dass nicht nur der erfindungsgemäße Steg stehen bleibt, sondern die Trennung zwischen dem Schnittkeil und den beiden Rohrabschnitten an einem oder mehreren Punkten nicht oder nicht vollständig erfolgt, so dass der Schnittkeil, an einem oder mehreren Haltepunkten in Form von gezielt positionierten Mini-Materialstegen gehalten, zunächst im Rohr verbleibt und später durch Anschlagen entfernt werden kann. Dies ermöglicht einen Transport des vorbearbeiteten Rohrs, in das bereits Gehrungsschnitte eingebracht sind, zur Weiterverarbeitung. Naturgemäß ist dies dann von besonderem Vorteil, wenn die Weiterverarbeitung erst vor Ort beim Anwender erfolgt. Jedoch auch beim Hersteller bietet es Vorteile, wenn der Schnittkeil erst unmittelbar vor der Schweißstation entfernt wird. Denn hierdurch reduziert sich die Gefahr, dass die beiden durch einen Steg, den sogenannten Biegesteg noch verbundenen Rohrabschnitte so unglücklich gegeneinander verdreht werden, dass der Steg bricht oder sich unvorteilhaft verformt. Durch den Verbleib des Schnittkeils im Ausschnitt behält das geschnittene Rohr auch weiterhin seine axiale Stabilität. Dadurch wird es ermöglicht mehrere in Achsrichtung hintereinander angeordnete Keilschnitte durchzuführen.

Im Rahmen der vorliegenden Erfindung können mehrere Gehrungsschnitte in ein Rohr eingebracht werden, um einen verketteten, in eine oder mehrere Raumrichtungen abknickenden Rohrverlauf zu erzielen. Mit dieser Weiterbildung der Erfindung wird ein großer potenzieller Vorteil der Erfindung realisiert. Denn wie eingangs erwähnt, ist es nach dem bisherigen Stand der Technik ohne aufwendige Teilemarkierungen nicht möglich gewesen, mehrere Abknickungen in Reihe in ein Rohr einzubringen, jedenfalls dann, wenn die Abknickungen in verschiedene Raumrichtungen oder mit unterschiedlichen Knickwinkeln hergestellt werden sollten. Denn beim herkömmlichen vollständigen Durchtrennen des geradlinigen Rohres durch Gehrungsschnitte liegen alle Rohrabschnitte einzeln vor und müssen vom Anwender gleichsam zusammengepuzzelt werden. Anders bei der vorliegenden Erfindung: da sämtliche Rohrabschnitte über den erfindungsgemäßen Steg verbunden bleiben, verbleiben sie in ihrer vorgesehenen räumlichen Zuordnung und Abfolge, so dass auch komplizierte Biegeverläufe durch einfaches Aufeinanderklappen der jeweiligen Rohrabschnitte und Verschweißen der aufeinanderliegenden Gehrungsschnittflächen hergestellt werden können.

Das erfindungsgemäße Verfahren wird schließlich bevorzugt in einem verketteten, automatisierten Prozess, insbesondere mittels Robotern, durchgeführt: Zunächst werden die Gehrungsschnitte in das im Wesentlichen geradlinige Rohr eingebracht, und dann, nach einem Aufeinander-Klappen der hierdurch entstandenen Rohrabschnitte, das Verschweißen der Gehrungsschnittflächen untereinander vorgenommen. Wie oben bereits beschrieben, entfällt der Zwischenschritt, in dem die Rohrabschnitte sorgfältig ausgerichtet und geheftet werden müssen, um anschließend schweißen zu können.

Die vornehmlich automatisierte Produktion (Serienfertigung) kann demnach in zwei Phasen verlaufen:

Zunächst erfolgt die Schnitteinbringung unter Beibehalt der geraden Rohrgestalt bei ausreichender Achs- und Drehstabilität. Für die automatisierte Produktion ist der Erhalt ausreichender Achs- und Drehstabilität während des Schneidvorgangs Voraussetzung, besonders, wenn eine Abfolge von Rohrschnitten hergestellt werden und dementsprechend längere Ausgangsrohre zum Einsatz kommen. Dies wird erst durch den vorübergehenden Verbleib der Schnittkeile und deren Fixierung mittels Mini-Materialstegen (Fixierstege) möglich. Außerdem kann dadurch die finale Bearbeitung der bereits geschnittenen Rohre, beispielsweise das Schweißen, an unterschiedlichen Orten stattfinden, da die bereits so geschnittenen Anordnungen wie starre Rohre transportiert werden können, ohne die geometrische Zuordnung der einzelnen, verketteten Rohrabschnitte zu verlieren.

Sodann erfolgt die Endfertigung der Bögen, und zwar durch segmentweises Lösen der starren Verbindung (Keilentnahme), Gegeneinanderklappen der teilweise unterschiedlich orientierten Rohrabschnitte und Schweißen entlang der Kontaktlinien benachbarter Rohrabschnitte.

Ein Ausführungsbeispiel eines vorbearbeiteten Rohrs ist im Folgenden anhand der beigefügten Zeichnungen näher beschrieben und erläutert. Es zeigen:
- Figur 1: eine seitliche Schnittansicht eines erfindungsgemäßen vorbearbeiteten Rohrs;
- Figur 2: eine Draufsicht auf das vorbearbeitete Rohr aus Figur 1;
- Figur 3: die Details X, Y und Z aus Figur 2.

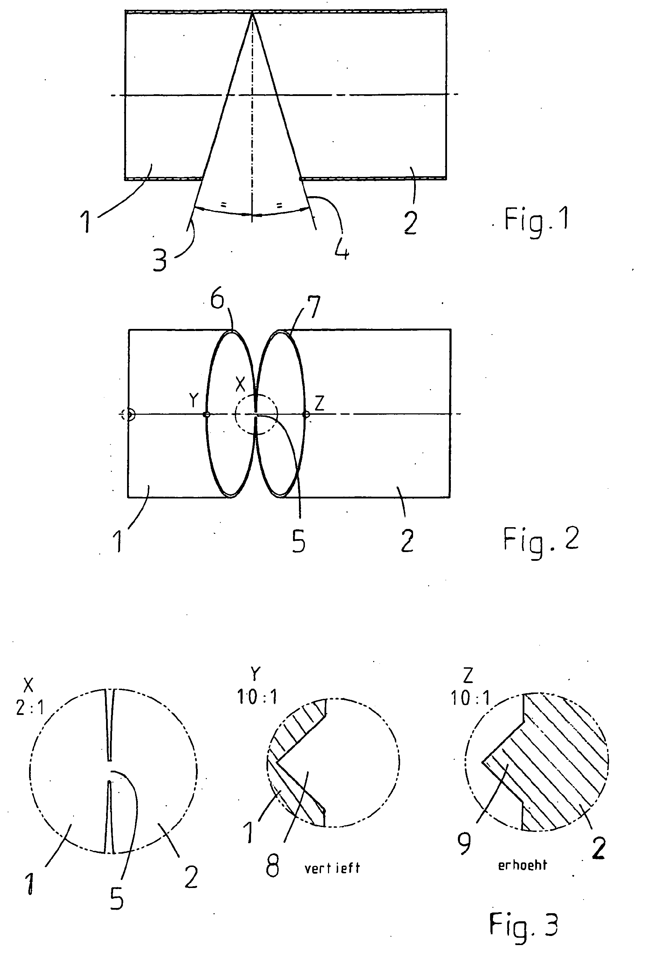

Das in Figur 1 im Schnitt dargestellte, vorbearbeitete Rohr besteht aus einem ersten Rohrabschnitt 1 und einem zweiten Rohrabschnitt 2, die durch zwei Gehrungsschnitte in Schnittebenen 3 und 4 getrennt sind. Die Schnittebenen 3 und 4 treffen sich innerhalb der Rohrwandung am Stoßpunkt zwischen dem ersten Rohrabschnitt 1 und dem zweiten Rohrabschnitt 2, und beim Setzen der Gehrungsschnitte ist dort ein Steg 5 stehengelassen worden, der die beiden Rohrabschnitte 1 und 2 verbindet.

Wie in der Draufsicht nach Figur 2 zu erkennen ist, sind am Umfang der Rohrabschnitte 1 und 2, dem Steg 5 jeweils diametral gegenüberliegend, Zentrierhilfen in einer ersten Gehrungsschnittfläche 6 des ersten Rohrabschnitts 1 und in einer zweiten Gehrungsschnittfläche 7 des zweiten Rohrabschnitts 2 eingebracht.

Diese Zentrierhilfen sind in Figur 3 genauer dargestellt: Das Detail Y zeigt die Zentrierhilfe in der ersten Gehrungsschnittfläche 6 am ersten Rohrabschnitt 1. Es handelt sich um eine Ausnehmung in Form einer rinnenförmigen Einkerbung 8. Das Gegenstück hierzu findet sich im Detail Z, das die Zentrierhilfe an der zweiten Gehrungsschnittfläche 7 des zweiten Rohrabschnitts 2 zeigt. Es handelt sich dort um einen Vorsprung, der als abgerundete Nocke 9 ausgebildet ist und passend in die Einkerbung 8 eingesetzt werden kann.

Die Einkerbung 8 und die Nocke 9 wirken mit dem in Detail X in einer Vergrößerung gezeigten Steg 5, der den ersten Rohrabschnitt 1 mit dem zweiten Rohrabschnitt 2 verbindet, solcher Art zusammen, dass, wie anhand Figur 2 deutlich wird, die beiden Rohrabschnitte 1 und 2, die ohnehin in der dargestellten Orientierung zueinander verbleiben, da sie am Steg 5 miteinander verbunden sind, lediglich so zusammengeklappt werden müssen, dass die erste Gehrungsschnittfläche 6 und die zweite Gehrungsschnittfläche 7 aufeinander zu liegen kommen, um das Verschweißen vorzubereiten und die Rohrabschnitte 1 und 2 exakt zueinander auszurichten. Denn während der Steg 5 hier wie ein Scharnier bzw. Gelenk fungiert, indem er sich beim Zusammenklappen der Rohrabschnitte 1 und 2 verbiegt, sorgen die Einkerbung 8 und die Nocke 9 für ein exaktes Zentrieren einer etwa erfolgten Verdrehung der Rohrabschnitte 1 und 2 um einen sich nicht nur biegenden, sondern auch verwindenden Steg 5. Solange der Steg 5 nicht durchtrennt wird und gleichzeitig die Nocke 9 passend in die Einkerbung 8 eingesetzt ist, liegen die Gehrungsschnittflächen 6 und 7 automatisch exakt ausgerichtet aufeinander, so dass das Verschweißen der beiden Rohrabschnitte 1 und 2 miteinander ohne Heftungs-Schweißpunkte und ohne ein aufwendiges Zentrieren erfolgen kann.

## Patentansprüche

1. Verfahren zum Herstellen eines Rohrs mit abknickendem Verlauf oder mit als Polygonzug ausgeführter Biegung, wobei zunächst für die abknickende Stelle des Rohrs oder für jeden Knick des Polygonzugs zwei Gehrungsschnitte in ein im Wesentlichen gerades Rohr eingebracht werden, wodurch zwei Rohrabschnitte (1, 2) mit entlang der Schnittebenen (3, 4) verlaufenden stirnseitigen Gehrungsschnittflächen (6, 7) und ein Schnittkeil entstehen, wonach die beiden Rohrabschnitte (1, 2) nach Entfernung des Schnittkeils an ihren Gehrungsschnittflächen (3, 4) aneinandergesetzt und rundum miteinander verschweißt werden, und wobei die Gehrungsschnitte so gesetzt werden, dass sich die Schnittebenen (3, 4) in einem in der Rohrwandung liegenden Punkt schneiden und an diesem Punkt ein die beiden Rohrabschnitte (3, 4) verbindender, biegbarer Steg (5) stehengelassen wird,
**dadurch gekennzeichnet,**
**dass** an einer vom Steg (5) beabstandeten Stelle der Gehrungsschnittflächen der beiden beteiligten Rohrabschnitte (1, 2) beim Setzen der Gehrungsschnitte in die Gehrungsschnittfläche eines der beiden Rohrabschnitte (2) zumindest ein Vorsprung (9) und in die Gehrungsschnittfläche des anderen Rohrabschnitts (1) mindestens eine Ausnehmung (8) als passgenaues Gegenstück zum Vorsprung (9) eingebracht werden.

2. Verfahren nach Anspruch 1,
**dadurch gekennzeichnet,**
**dass** der Vorsprung (9) und die Ausnehmung (8) in etwa diametral dem Steg (5) gegenüberliegend in die Gehrungsschnittflächen der beiden Rohrabschnitte (1,2) eingebracht werden.

3. Verfahren nach einem der Ansprüche 1 oder 2,
**dadurch gekennzeichnet,**
**dass** als Vorsprung (9) eine dreieckige oder abgerundete Nocke und als Ausnehmung (8) eine dreieckige oder rinnenförmige Einkerbung in die Gehrungsschnittflächen eingebracht werden.

4. Verfahren nach einem der Ansprüche 1 bis 3,
**dadurch gekennzeichnet,**
**dass** die Gehrungsschnitte so gesetzt werden, dass der Schnittkeil zunächst mittels nicht oder nicht vollständig durchtrennter Haltepunkte im Rohr verbleibt.

5. Verfahren nach einem der Ansprüche 1 bis 4,
**dadurch gekennzeichnet,**
**dass** die Gehrungsschnitte mittels Laserstrahlung, mittels Wasserstrahl oder durch Plasmaschneiden hergestellt werden.

6. Verfahren nach einem der Ansprüche 1 bis 5,
**dadurch gekennzeichnet,**
**dass** mehrere Gehrungsschnitte in ein Rohr eingebracht werden, um einen verketteten, in eine oder mehrere Raumrichtungen abknickenden Rohrverlauf zu erzielen.

7. Verfahren nach einem der Ansprüche 1 bis 6,
**dadurch gekennzeichnet,**
**dass** das Setzen der Gehrungsschnitte und das Verschweißen der Gehrungsschnittflächen untereinander in einem verketteten, automatisierten Prozess erfolgen.

8. Vorbearbeitetes Rohr zum Herstellen eines Rohrs mit abknickendem Verlauf oder mit als Polygonzug ausgeführter Biegung, welches vorbearbeitete Rohr mindestens zwei Rohrabschnitte (1, 2) aufweist, die durch zwei, einen Schnittkeil zwischen den Rohrabschnitten (1, 2) und je eine Gehrungsschnittfläche an jedem Rohrabschnitt (1, 2) bildende Gehrungschnitte getrennt sind, wobei die Gehrungsschnitte so gesetzt sind, dass sich die Schnittebenen (3, 4) in einem in der Rohrwandung liegendem Punkt schneiden und an diesem Punkt ein die beiden beteiligten Rohrabschnitte (1, 2) verbindender biegbarer Steg (5) stehen geblieben ist,
**dadurch gekennzeichnet,**
**dass** an einer vom Steg (5) beabstandeten Stelle der Gehrungsschnittflächen (6, 7) der beiden beteiligten Rohrabschnitte (1, 2) in der Gehrungsschnittfläche (7) eines der beiden Rohrabschnitte (2) zumindest ein Vorsprung (9) und in der Gehrungsschnittfläche (6) des anderen Rohrabschnitts (1) mindestens eine Ausnehmung (8) als passgenaues Gegenstück zum Vorsprung (9) vorhanden ist.

9. Vorbearbeitetes Rohr nach Anspruch 8,
**dadurch gekennzeichnet,**
**dass** der Schnittkeil an nicht oder nicht vollständig durchtrennten Haltepunkten leicht herauslösbar im Rohr befestigt verblieben ist.

## Claims

1. Method of producing a pipe with a bent profile or with a bend formed as a polygonal traverse, wherein first of all for the bending point on the pipe or for each bend of the polygonal traverse two mitre cuts are made in a substantially straight pipe, whereby two pipe sections (1, 2) are produced with mitre-cut end faces (6, 7) extending along the cutting planes (3, 4) and a cutting wedge, and then after removal of the cutting wedge the two pipe sections (1, 2) are placed adjacent to one another on their mitre-cut faces (3, 4) and are welded to one another all round, and wherein the mitre-cut faces are positioned in such a way that the cutting planes (3, 4) intersect at a point located in the pipe wall and at this point a flexible web is left intact connecting the two pipe sections (3, 4), **characterised in that** at a point on the mitre-cut faces of the two pipe sections (1, 2) which is spaced from the web (5), during making of the mitre cuts at least one projection (9) is made in the mitre-cut face of one of the two pipe sections (2) and at least one recess (8) is made in the mitre-cut face of the other pipe section (1) as an accurately fitting counterpart to the projection (9).

2. Method as claimed in Claim 1, **characterised in that** the projection (9) and the recess (8) are produced in the mitre-cut faces of the two pipe sections (1, 2) at a position approximately diametrically opposite the web (5).

3. Method as claimed in either Claim 1 or Claim 2, **characterised in that** a triangular or rounded boss forming the projection (9) and a triangular or groove-shaped notch forming the recess (8) are made in the mitre-cut faces.

4. Method as claimed in any one of Claims 1 to 3, **characterised in that** the mitre cuts are placed so that the cutting wedge initially remains in the pipe by means of retaining points which are not severed or not completely severed.

5. Method as claimed in any one of Claims 1 to 4, **characterised in that** the mitre cuts are produced by means of laser radiation, by means of water jets or by plasma cutting.

6. Method as claimed in any one of Claims 1 to 5, **characterised in that** a plurality of mitre cuts are made in a pipe in order to achieve a linked pipe profile bent in one or more spatial directions.

7. Method as claimed in any one of Claims 1 to 6, **characterised in that** the placing of the mitre cuts and the welding of the mitre-cut faces to one another take place in a linked automatic process.

8. Pre-processed pipe for producing a pipe with a bent profile or with a bend formed as a polygonal traverse, wherein the pre-processed pipe has at least two pipe sections (1, 2) which are separated by two mitre cuts forming a cutting wedge between the pipe sections (1, 2) and one mitre-cut face on each pipe section (1, 2), wherein the mitre cuts are positioned in such a way that the cutting planes (3, 4) intersect at a point located in the pipe wall and at this point a flexible web is left intact connecting the two pipe sections (1, 2), **characterised in that** at a point on the mitre-cut faces (6, 7) of the two pipe sections (1, 2) which is spaced from the web (5) at least one projection (9) is made in the mitre-cut face (7) of one of the two pipe sections (2) and at least one recess (8) is made in the mitre-cut face (6) of the other pipe section (1) as an accurately fitting counterpart to the projection (9).

9. Pre-processed pipe as claimed in Claim 8, **characterised in that** the cutting wedge remains fixed so as to be easily removable in the pipe at retaining points which are not severed or not completely severed.

## Revendications

1. Procédé de fabrication d'un tuyau à allure infléchie ou à courbure ayant un tracé polygonal, sachant qu'on pratique d'abord, pour le point d'inflexion du tuyau ou pour chaque inflexion du tracé polygonal, deux coupes d'onglet dans un tuyau essentiellement rectiligne, de sorte qu'on obtient deux tronçons de tuyau (1, 2) pourvus de faces frontales de coupe d'onglet (6, 7) s'étendant le long des plans de coupe (3, 4), et un coin de coupe, à la suite de quoi les deux tronçons de tuyau (1, 2) sont, après élimination du coin de coupe, placés l'un contre l'autre par leurs faces de coupe d'onglet (6, 7) et soudés l'un à l'autre tout autour, et sachant que les coupes d'onglet sont réalisées de telle sorte que les plans de coupe (3, 4) se croisent en un point situé sur la paroi du tuyau, et qu'une entretoise flexible (5) reliant les deux tronçons de tuyau (1, 2) est laissée en ce point,
**caractérisé en ce que**, lors de la réalisation des coupes d'onglet, en un point des faces de coupe d'onglet des deux tronçons de tuyau concernés (1, 2) qui est distant de l'entretoise (5), on pratique dans la face de coupe d'onglet d'un (2) des deux tronçons de tuyau au moins une saillie (9), et on pratique dans la face de coupe d'onglet de l'autre tronçon de tuyau (1) au moins un évidement (8) comme pendant en ajustement précis à la saillie (9).

2. Procédé selon la revendication 1, **caractérisé en ce que** la saillie (9) et l'évidement (8) sont pratiqués approximativement en opposition diamétrale à l'entretoise (5) dans les faces de coupe d'onglet des deux tronçons de tuyau (1, 2).

3. Procédé selon la revendication 1 ou 2, **caractérisé en ce qu'**on pratique dans les faces de coupe d'onglet un ergot triangulaire ou arrondi comme saillie (9), et une encoche triangulaire ou en forme de rainure comme évidement (8).

4. Procédé selon l'une des revendications 1 à 3, **caractérisé en ce que** les coupes d'onglet sont réalisées de telle sorte que le coin de coupe reste initialement sur le tuyau au moyen de points de retenue non ou non totalement sectionnés.

5. Procédé selon l'une des revendications 1 à 4, **caractérisé en ce que** les coupes d'onglet sont réalisées au moyen d'un faisceau laser, au moyen d'un jet d'eau ou par découpage au jet de plasma.

6. Procédé selon l'une des revendications 1 à 5, **caractérisé en ce que** plusieurs coupes d'onglet sont pratiquées dans un tuyau, afin d'obtenir une allure de tuyau en chaîne, infléchie dans une ou plusieurs directions spatiales.

7. Procédé selon l'une des revendications 1 à 6, **caractérisé en ce que** la réalisation des coupes d'onglet et le soudage des faces de coupe d'onglet entre elles s'effectuent en un processus en chaîne automatisé.

8. Tuyau pré-usiné pour la fabrication d'un tuyau à allure infléchie ou à courbure ayant un tracé polygonal, ce tuyau pré-usiné présentant au moins deux tronçons de tuyau (1,2) qui sont séparés par deux coupes d'onglet formant un coin de coupe entre les tronçons de tuyau (1, 2) et une face de coupe d'onglet respective sur chaque tronçon de tuyau (1, 2), sachant que les coupes d'onglet sont réalisées de telle sorte que les plans de coupe (3, 4) se croisent en un point situé sur la paroi du tuyau, et qu'une entretoise flexible (5) reliant les deux tronçons de tuyau concernés (1, 2) a été laissée en ce point, **caractérisé en ce que**, en un point des faces de coupe d'onglet (6, 7) des deux tronçons de tuyau concernés (1, 2) qui est distant de l'entretoise (5), au moins une saillie (9) est présente dans la face de coupe d'onglet (7) d'un (2) des deux tronçons de tuyau, et au moins un évidement (8) est présent comme pendant en ajustement précis à la saillie (9) dans la face de coupe d'onglet (6) de l'autre tronçon de tuyau (1).

9. Tuyau pré-usiné selon la revendication 8, **caractérisé en ce que** le coin de coupe est resté fixé de manière facilement détachable sur le tuyau, par des points de retenue non ou non totalement sectionnés.
